# EUROPEAN PATENT APPLICATION

(11) **EP 4 011 604 A1**
(43) Date of publication of application: **15.06.2022**
(21) Application number: 20213785.7
(22) Date of filing: 14.12.2020
(51) Int. Cl.: B29C 70/52, B29B 15/12

(54) **DIPPING DEVICE AND PULTRUSION EQUIPMENT COMPRISING THE SAME**

(71) Applicant: Covestro Deutschland AG, 51373 Leverkusen (DE)
(72) Inventor: CHEN, Ruqi, Shanghai 200237 (CN); LIU, Liguo, Shanghai 201106 (CN); DENG, Yan, Shanghai 200050 (CN)
(74) Representative: Levpat

(57) **Abstract**

The present invention relates to a dipping device and a pultrusion equipment comprising the same and a pultrusion process using the same. The dipping device comprises a dipping tank and a first pre-forming template disposed in the dipping tank, wherein the position of the first pre-forming template in the dipping tank is adjustable, and said template is provided thereon with a plurality of first locating holes for guiding yarns. The dipping device of the present invention can spread fibers in the dipping tank, and ensure that the fibers are fully impregnated, the tension is uniform, and the resin replacement rate is improved. During preparing a fiber-reinforced resin composite with the pultrusion equipment according to the present invention, the drafting force is stable, and the resulting final product is well impregnated.

## Description

### TECHNICAL FIELD

The present invention belongs to the field of composite processing. In particular, the present invention relates to a dipping device and a pultrusion equipment comprising the same.

### BACKGROUND ART

The pultrusion process is a composite forming process, which basically involves subjecting fiber materials for reinforcement (for example, glass fiber twistless roving, glass fiber continuous mat, and glass fiber surface mat, etc.), under external force for traction, to impregnation, guidance by a pre-forming template, and curing by a thermal mold to obtain a profile product, and cutting it into certain length according to use requirements.

At present, the thermoset resin-based composite is mainly produced by an open dipping process, i.e. after fibers or fabrics or mats pass through a dipping tank equipped with pressing roller(s) or pressing rod(s), the fibers impregnated with a resin are formed through a pre-forming template and extruded, and then enter a heated mold for curing. During the dipping process, the fibers need to be fully impregnated and free of any dry area, otherwise the composite will be defective. The viscosity of the resin system, the structure of the dipping tank, and the dipping process all exert great influence on the fiber impregnation extent. In the conventional pultrusion process, an open dipping tank is generally equipped with only one or a pair of pressing rod(s)/roller(s); the fibers are densely arranged in the tank and prone to aggregate; especially for a high-viscosity resin system, it would be very difficult to ensure sufficient impregnation of the fibers. Moreover, since every strand of fibers follows a different path of impregnation and is subject to different tension, this would easily render the traction force unstable, and impair continuous production of the product. Especially in the process of high-speed pultrusion production, it is vital to ensure stable tension. The dense arrangement of fibers also leads to reduced contact area with the resin, decreased resin replacement rate, and extended retention time of redundant resin in the dipping tank. These problems cause waste on the one hand, and on the other hand give rise to increased viscosity or even gelling due to self-reaction of the resin.

In the event that a closed dipping box is used for impregnation, for one thing, as the dipping box is rather cramped, it will generate worse fiber impregnation effect than the open tank with respect to a high-viscosity system. For another, it would still be necessary to increase investment in the dipping machine and design of the dipping box.

Due to the limitation of the dipping device, from the perspective of the resin formula, a volatile solvent is often added into the high-viscosity system to decrease its viscosity. This, however, will also bring such problems as emission of volatile organic compounds (VOC) and high porosity of the final product.

Furthermore, in the conventional pultrusion process, especially in the open dipping process, the ambient temperature and humidity greatly affect the resin. For example, due to moisture absorption and increased ambient temperature, the common epoxy-anhydride resin and polyurethane resin will have increased viscosity, shortened period of operation, and high bubble rate in the final product, which eventually renders the final product defective.

Therefore, it is imperative to develop a dipping device in the art that can ensure complete impregnation of fibers in high-viscosity resin while at the same time reduce the influence of the environment on the resin system.

### SUMMARY OF THE INVENTION

One objective of the present invention is to provide a dipping device that can ensure complete impregnation of fibers in a high-viscosity resin while at the same time reduce the influence of the environment on the resin system.

Another objective of the present invention is to provide a pultrusion equipment comprising the above dipping device.

Yet another objective of the present invention is to provide a pultrusion process using the above dipping device.

Thus, according to one aspect, the present invention provides a dipping device, comprising:
a dipping tank; and
a first pre-forming template disposed in the dipping tank, wherein the first pre-forming template is provided with a plurality of first locating holes for guiding yarns having a hole diameter Φ of 4-8 mm, and the distance L between the centers of two adjacent holes is 8-16 mm.

According to another aspect, the present invention provides a pultrusion equipment for producing a fiber reinforced resin composite, comprising:
a fiber shelf;
a dipping device in the downstream of the fiber shelf;
a second pre-forming template in the downstream of the dipping device, wherein the second pre-forming template is provided with a plurality of second locating holes for guiding yarns which are disposed on the second pre-forming template in the same manner as the first locating holes for guiding yarns on the first pre-forming template;
a curing and molding device in the downstream of the second pre-forming template; and
a traction device in the downstream of the curing and molding device.

According to yet another aspect, the present invention provides a pultrusion process for producing a fiber reinforced resin composite, comprising the steps of:
i) passing fibers from a fiber shelf through a first pre-forming template in a dipping device and a second pre-forming template in the downstream of the dipping device via first locating holes for guiding yarns and second locating holes for guiding yarns in turn, so that the fibers are impregnated with a resin in the dipping device, wherein the angle ∠A between the fibers entering and exiting the first locating holes for guiding yarns of the first pre-forming template ranges from 90° to 150°;
ii) introducing the fibers that have been impregnated with the resin and have passed through the second pre-forming template into a curing and molding device where the fibers are cured and molded to obtain a fiber reinforced resin composite; and
iii) pulling the resulting fiber reinforced resin composite away from the curing and molding device through a traction device (6).

The dipping device of the present invention can spread fibers in the dipping tank, and ensure that the fibers are fully impregnated, the tension is uniform, and the resin replacement rate is improved. During producing a fiber-reinforced resin composite with the pultrusion equipment according to the present invention, the drafting force is stable, and the resulting final product is well impregnated.

### BRIEF DESCRIPTION OF THE DRAWINGS

The present invention will be described and explained in detail in conjunction with the drawings hereinafter. The same reference number represents the same element in the drawings.

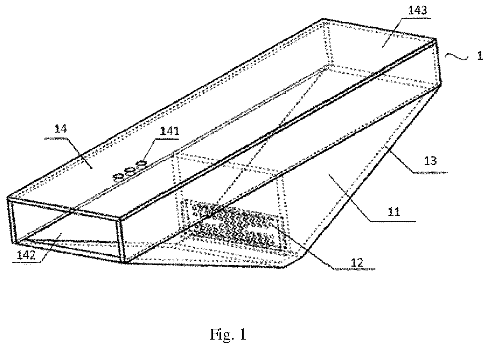

Fig. 1 shows a schematic diagram of a dipping device 1 according to an embodiment of the present invention, in which 11 represents a dipping tank; 12 represents a first pre-forming template; 13 represents a jacket; 14 represents a dust cover; 141 represents vents; and 142, 143 represent ends of the dust cover.

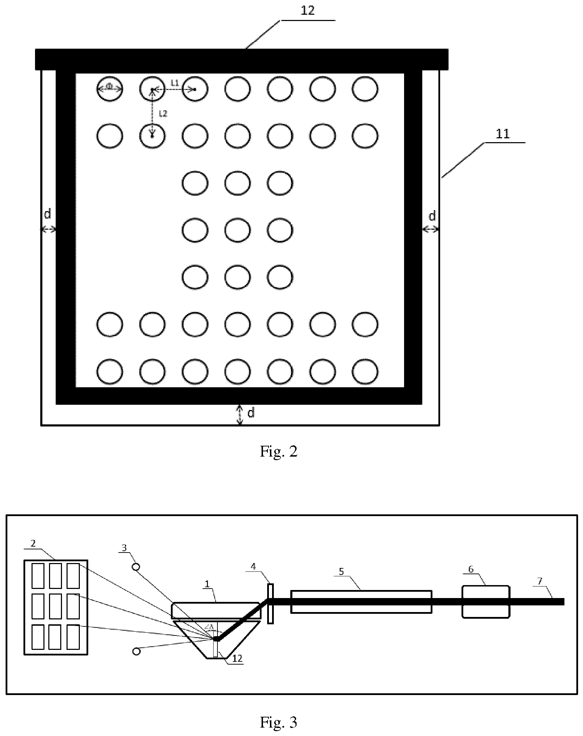

Fig. 2 shows a schematic diagram of the first pre-forming template 12 in Fig. 1, in which 11 represents the dipping tank; 12 represents the first pre-forming template; and 121 represents first locating holes for guiding yarns.
Fig. 3 shows a schematic diagram of a pultrusion equipment for producing a fiber reinforced resin composite according to an embodiment of the present invention, in which 1 represents the dipping device; 2, 3 represent fiber shelves; 4 represents a second pre-forming template; 5 represents a curing and molding device; 6 represents a traction device; and 7 represents a fiber reinforced resin composite.

### DETAILED DESCRIPTION OF THE INVENTION

Some embodiments of the present invention will be non-restrictively illustrated in conjunction with the drawings hereinafter.

Referring to Figs. 1 and 2, according to one aspect, the present invention provides a dipping device 1, comprising:
a dipping tank 11; and
a first pre-forming template 12 disposed in the dipping tank 11, wherein the first pre-forming template 12 is provided with a plurality of first locating holes for guiding yarns 121 having a hole diameter Φ of 4-8 mm, and the distance L between the centers of two adjacent holes is 8-16 mm.

The dipping tank has an open design.

Preferably, the tank body of the dipping tank 11 has a shape of trapezoid, and more preferably, it is in the form of an inverted isosceles trapezoid.

Preferably, the position of the first pre-forming template 12 in the dipping tank 11 is adjustable.

For instance, the first pre-forming template 12 can move up and down relative to the dipping tank 11, or can move in the fiber advancing direction relative to the dipping tank 11.

Preferably, there is a gap d of at least 1 mm between the first pre-forming template 12 and the inner wall of the dipping tank 11, so that the resin on both sides of the first pre-forming template 12 has better flowability.

Before dipping, the first pre-forming template 12 can be fixed within the dipping tank 1 by positioning bolts.

The first pre-forming template 12 can be made of materials including, among other things, polytetrafluoroethylene (PTFE), high-density polyethylene (HDPE), stainless steel and ceramic hole sleeves.

Preferably, the first locating holes for guiding yarns 121 are arranged in an I-shape.

In some embodiments, the first locating holes for guiding yarns 121 have the hole diameter Φ of 5 mm, horizontal hole spacing L1 of 8.5 mm, and longitudinal hole spacing L2 of 10 mm.

Preferably, the dipping device 1 further comprises:
a jacket 13 disposed outside the dipping tank 11 to contain a fluid for adjusting the temperature of the dipping tank 11.

The fluid can be water or an oil.

In some embodiments, the bottom of the jacket 13 is provided with at least one passageway connected to a fluid bath to fulfill fluid circulation. The fluid bath can be connected to a temperature control device (not shown) to adjust the temperature of the fluid.

In some embodiments, the jacket 13 can be connected to a temperature control device (not shown) to adjust the temperature of the fluid in the jacket.

A person skilled in the art can control the temperature of the dipping tank 11 by adjusting the temperature of the fluid as necessary, thereby regulating the viscosity of the glue solution (i.e. the resin) in the dipping tank, and ensuring that the viscosity is appropriate and stable, for example, it increases by <500mPa·s during the operation.

Preferably, the dipping device 1 further comprises:
a dust cover 14 disposed above the dipping tank 11, wherein the top or a side of the dust cover 14 is provided with vents 141, and both ends 142, 143 are open.

The fibers can enter and exit the dipping tank 11 through ends 142 and 143 of the dust cover 14.

Preferably, the dust cover 14 is detachable.

When the ambient humidity is relatively high (for example, greater than 60 RH%), the dust cover 14 can be installed, and a dry inert gas can be introduced through the vents 141 to ensure that the resin in the dipping tank 11 is not affected by the ambient moisture.

The inert gas may be nitrogen, helium, or the like.

Prior to the dipping procedure, the resin can be either manually added into the dipping tank 11, or injected into the dipping tank 11 by a resin-injection machine.

Referring to Fig. 3, according to another aspect, the present invention provides a pultrusion equipment for preparing a fiber reinforced resin composite, comprising:
a fiber shelf 2,3;
the dipping device 1 in the downstream of the shelf;
a second pre-forming template 4 in the downstream of the dipping device 1, wherein the second pre-forming template 4 is provided with a plurality of second locating holes for guiding yarns 41 which are disposed on the second pre-forming template 4 in the same manner as the first locating holes for guiding yarns 121 on the first pre-forming template 12;
a curing and molding device 5 in the downstream of the second pre-forming template 4; and
a traction device 6 in the downstream of the curing and molding device 5.

The pultrusion equipment of the present invention is not only suitable for pultrusion of unidirectional fiber yarns, but also suitable for pultrusion of unidirectional fiber yarns together with fiber mats or fabrics. In the case of fiber mats or fabrics, strip-shaped opening(s) can be arranged on the first pre-forming template to allow them to pass through. The size of the strip-shaped opening(s) suitable for passage of the fiber mats or fabrics can be determined according to the size of the fiber mats or fabrics.

The fiber shelf 2, 3, the curing and molding device 5, and the traction device 6 may be the same as those commonly used in the pultrusion equipment in the art. Thus, there is no need to elaborate on them again.

The positions of the fiber shelf 2, 3, the first pre-forming template 12 and the second pre-forming template 4 can be adjusted so that the angle ∠A between the fibers entering and exiting the first locating holes for guiding yarns of the first pre-forming template ranges from 90° to 150°.

Still referring to Fig. 3, according to another aspect, the present invention provides a pultrusion process for producing a fiber reinforced resin composite, comprising the steps of:
i) passing fibers from a fiber shelf through a first pre-forming template 12 in a dipping device 1 and a second pre-forming template 4 in the downstream of the dipping device 1 via first locating holes for guiding yarns (121) and second locating holes for guiding yarns (41) in turn, so that the fibers are impregnated with a resin in the dipping device 1, wherein the angle ∠A between the fibers entering and exiting the first locating holes for guiding yarns 121 of the first pre-forming template 12 ranges from 90° to 150°;
ii) introducing the fibers that have been impregnated with the resin and have passed through the second pre-forming template 4 into enter a curing and molding device 5 where the fibers are cured and molded to obtain a fiber reinforced resin composite 7; and
iii) pulling the resulting fiber reinforced resin composite 7 away from the curing and molding device 5 through a traction device (6).

A person skilled in the art can adjust the process parameters in each step according to the fibers and resin used.

When the ambient humidity is relatively high (for example, greater than 60 RH%), a dry inert gas (for example, nitrogen or helium) can be introduced through the vents 141 to ensure that the resin in the dipping tank 11 is not affected by the ambient moisture.

When the viscosity of the resin is high, a fluid in the jacket 13 can be heated to increase the temperature of the resin, thereby reducing the viscosity of the resin.

The description of each feature in the present application can be combined with each other without mutual contradiction, and falls within the scope as claimed in the present application.

The terms "comprising" and "including" described in the present application cover the circumstances which further comprise or include other elements not specifically mentioned and the circumstances consisting of the elements mentioned.

Unless otherwise defined, all technical and scientific terms used herein have the same meaning as commonly understood by a person skilled in the field the present invention belongs to. When the definition of a term in the present description conflicts with the meaning as commonly understood by a person skilled in the field the present invention belongs to, the definition described herein shall apply.

Unless otherwise specified, all numerical values expressing the amount of components and process parameters and the like used in the specification and claims are to be understood as being modified by the term "about". Therefore, unless indicated to the contrary, the numerical values and parameters described herein are approximate values which may be changed according to the desired performance.

### Examples

The concept, the specific structure and the resulting technical effects of the present invention will be further illustrated below in conjunction with the Examples so that a person skilled in the art can fully understand the objectives, features and effects of the present invention. The skilled person in the art will understand that the Examples herein are for illustrative purposes only and the scope of the present invention is not limited thereto.

### Example 1

Referring to Fig. 1, the dipping device 1 comprises:
a dipping tank 11;
a first pre-forming template 12 disposed in the dipping tank 11, wherein the position of the first pre-forming template 12 in the dipping tank 11 is adjustable, and said template is provided with a plurality of first locating holes for guiding yarns 121 thereon (with the hole diameter Φ of 5 mm, horizontal hole spacing L1 of 8.5 mm, and longitudinal hole spacing L2 of 10 mm);
a jacket 13 disposed outside the dipping tank 11 to contain a fluid for adjusting the temperature of the dipping tank 11, wherein the bottom of the jacket 13 is provided with at least one passageway connected to a fluid bath (not shown) to fulfill fluid circulation, and the fluid bath can be connected to a temperature control device (not shown) to adjust the temperature of the fluid; and
a dust cover 14 disposed above the dipping tank 11, wherein the top of the dust cover 14 is provided with vents 141, and both ends 142, 143 are open.

### Example 2

Referring to Fig. 3, the pultrusion equipment for producing a fiber reinforced resin composite comprises:
fiber shelves 2,3;
a dipping device 1 in the downstream of the fiber shelves 2,3, wherein the dipping device 1 is as illustrated in Example 1;
a second pre-forming template 4 in the downstream of the dipping device 1, wherein the second pre-forming template 4 is provided with a plurality of second locating holes for guiding yarns 41 which are disposed on the second pre-forming template 4 in the same manner as the first locating holes for guiding yarns 121 on the first pre-forming template 12;
a curing and molding device 5 in the downstream of the second pre-forming template 4; and
a traction device 6 in the downstream of the curing and molding device 5.

### Example 3

In this Example, the pultrusion equipment of Example 2 was used to produce a fiber reinforced resin composite.

Referring to Figs. 1 and 3, the dust cover 14 was not installed, and the jacket 13 did not contain a fluid for adjusting the temperature of the dipping tank.

194 bundles (2400tex) of glass fiber yarns were guided from the fiber shelves 2,3, and then they passed through the first pre-forming template 12 in the dipping device 1 and the second pre-forming template 4 in the downstream of the dipping device 1 via the first locating holes for guiding yarns 121 and the second locating holes for guiding yarns 41 in turn. The positions of the first pre-forming template 12 and the second pre-forming template 4 were adjusted so that the angle ∠A between the fibers entering and exiting the first locating holes for guiding yarns 121 of the first pre-forming template 12 was 120°. The dipping tank 11 was filled with aliphatic polyurethane resin (Desmocomp AP200 from Covestro, with a viscosity of 3,000 mPa·s).

Next, the fibers that had been impregnated with the resin and had passed through the second pre-forming template 4 entered the curing and molding device 5 where the fibers were cured and molded to obtain a fiber reinforced resin composite 7. The temperatures of the curing and molding device 5 from the inlet to the outlet were controlled to be as follows: 105°C/200°C/220°C/220°C.

Finally, the resulting fiber reinforced resin composite 7 was pulled away from the curing and molding device 5 through the traction device 6 at the rate of 1 m/min, and cut into desired length by a cutting device (not shown). It was observed that the final product featured a smooth surface, without any dry yarn area. Moreover, after being cut at the cross section, the final product showed no black spots, which means it was well impregnated. The traction device had a stable drafting force, the value of which fluctuated within a range of less than 10%.

### Example 4

This Example was carried out with reference to Figs. 1 and 3 and Example 3, except that the dipping tank 11 was installed with the dust cover 14, and the oil bath was externally circulated (not shown) to supply an oil to the jacket 13.

194 bundles (2400tex) of glass fiber yarns were guided from the fiber shelves 2,3, and then they passed through the first pre-forming template 12 in the dipping device 1 and the second pre-forming template 4 in the downstream of the dipping device 1 via one end (marked as 142) of the dust cover 14, the first locating holes for guiding yarns 121, another end (marked as 143) of the dust cover 14, and the second locating holes for guiding yarns 41 in turn. The positions of the first pre-forming template 12 and the second pre-forming template 4 were adjusted so that the angle ∠A between the fibers entering and exiting the first locating holes for guiding yarns 121 of the first pre-forming template 12 was 120°. The temperature of the dipping tank 11 was increased to 50°C by heating the oil. The aliphatic polyurethane resin in the dipping device 1 had a viscosity of 1,000 mPa·s. The vents 141 on the dust cover 14 were connected to a nitrogen source (not shown). Through these vents 141, nitrogen was introduced to the dipping tank 11 to prevent the resin from contacting with the moisture in the air.

Next, the fibers that had been impregnated with the resin and had passed through the second pre-forming template 4 entered the curing and molding device 5 where the fibers were cured and molded to obtain a fiber reinforced resin composite 7. The temperatures of the curing and molding device 5 from the inlet to the outlet were controlled to be as follows: 105°C/200°C/220°C/220°C.

Finally, the resulting fiber reinforced resin composite 7 was pulled away from the curing and molding device 5 through the traction device 6 at the rate of 1 m/min, and cut into desired length by a cutting device (not shown). It was observed that the final product featured a smooth surface, without any dry yarn area. Moreover, after being cut at the cross section, the final product showed no black spots, which means it was well impregnated. The traction device had a stable drafting force, the value of which fluctuated within a range of less than 10%.

### Comparative Example 1

This comparative example was carried out with reference to Example 3, except that the first pre-forming template 12 disposed in the dipping tank 11 was replaced with a pressing rod, under the effect of which the glass fiber yarns were dipped in the aliphatic polyurethane resin in the dipping tank 11.

During the pultrusion, the fibers were not fully impregnated after leaving the dipping tank, which easily resulted in poor impregnation, peeling and white area of the final product.

The exemplary embodiments or examples of the present invention are described above, but are not intended to limit the present invention. To a person skilled in the art, the present invention may be modified or changed in various means. Any change, equivalent replacement, improvement and the like without departing from the principle and spirit of the present invention all fall within the scope of the claims of the present application.

## Claims

1. A dipping device (1), comprising:
a dipping tank (11); and
a first pre-forming template (12) disposed in the dipping tank (11), wherein the first pre-forming template (12) is provided with a plurality of first locating holes for guiding yarns (121) having a hole diameter Φ of 4-8 mm, and the distance L between the centers of two adjacent holes is 8-16 mm.

2. The dipping device (1) according to claim 1, wherein the dipping tank (11) has a shape of trapezoidal.

3. The dipping device (1) according to claim 1, wherein the position of the first pre-forming template (12) in the dipping tank (11) is adjustable.

4. The dipping device (1) according to claim 1, wherein there is a gap of at least 1 mm between the first pre-forming template (12) and the internal wall of the dipping tank (11).

5. The dipping device (1) according to any one of claims 1 to 3, further comprising:
a jacket (13) disposed outside the dipping tank (11) to contain a fluid for adjusting the temperature of the dipping tank (11) .

6. The dipping device (1) according to claim 5, wherein the bottom of the jacket (13) is provided with at least one passageway connected to a fluid bath to fulfill fluid circulation.

7. The dipping device (1) according to any one of claims 1 to 3, further comprising:
a dust cover (14) disposed above the dipping tank (11), wherein the top or a side of the dust cover (14) is provided with vents (141), and both ends (142, 143) are open.

8. The dipping device (1) according to claim 7, wherein the dust cover (14) is detachable.

9. A pultrusion equipment for producing a fiber reinforced resin composite, comprising:
a fiber shelf (2,3);
a dipping device (1) according to any one of claims 1 to 8 in the downstream of the fiber shelf (2,3);
a second pre-forming template (4) in the downstream of the dipping device (1), wherein the second pre-forming template (4) is provided with a plurality of second locating holes for guiding yarns (41) which are disposed on the second pre-forming template (4) in the same manner as the first locating holes for guiding yarns (121) on the first pre-forming template (12);
a curing and molding device (5) in the downstream of the second pre-forming template (4); and
a traction device (6) in the downstream of the curing and molding device (5).

10. A pultrusion process for producing a fiber reinforced resin composite, comprising the steps of:
i) passing fibers from a fiber shelf through a first pre-forming template (12) in a dipping device (1) and a second pre-forming template (4) in the downstream of the dipping device (1) via first locating holes for guiding yarns (121) and second locating holes for guiding yarns (41) in turn, so that the fibers are impregnated with a resin in the dipping device (1), wherein the angle ∠A between the fibers entering and exiting the first locating holes for guiding yarns (121) of the first pre-forming template (12) ranges from 90° to 150°;
ii) introducing the fibers that have been impregnated with the resin and have passed through the second pre-forming template (4) into a curing and molding device (5) where the fibers are cured and molded to obtain a fiber reinforced resin composite (7); and
iii) pulling the resulting fiber reinforced resin composite (7) away from the curing and molding device (5) through a traction device (6).
